# EUROPEAN PATENT SPECIFICATION

(11) **EP 4 391 815 B1**
(45) Date of publication and mention of the grant of the patent: **15.10.2025**
(21) Application number: 22768411.5
(22) Date of filing: 23.08.2022
(51) Int. Cl.: A23D 9/02, A23D 9/04, C11B 3/00, C11B 3/04, C11B 3/10, C11B 13/00

(54) **NOVEL METHOD FOR REMOVING DEMULSIFIERS FROM A FEEDSTOCK**
NEUES VERFAHREN ZUR ENTFERNUNG VON DEMULGATOREN AUS EINEM EINSATZSTOFF
NOUVEAU PROCÉDÉ D'ÉLIMINATION DE DÉSÉMULSIFIANTS CONTENUS DANS UNE CHARGE D'ALIMENTATION

(30) Priority: 24.08.2021 FI 20215885
(43) Date of publication of application: 03.07.2024
(73) Proprietor: Neste Oyj, 02150 Espoo (FI)
(72) Inventor: WAHLSTRÖM, Ronny, 06101 PORVOO (FI)
(74) Representative: Zacco Denmark A/S
(86) International application number: PCT/EP2022/073392
(87) International publication number: WO 2023/025756

(56) References cited:
- WO-A1-2007/146971
- WO-A1-2020/198595
- US-A1- 2012 051 980
- US-A1- 2012 245 370
- US-A1- 2014 275 589
- US-A1- 2017 107 452
- BRYAN R MOSER ET AL: "Biodiesel from Corn Distillers Dried Grains with Solubles: Preparation, Evaluation, and Properties", BIOENERGY RESEARCH, SPRINGER-VERLAG, NEW YORK, vol. 5, no. 2, 3 December 2011 (2011-12-03), pages 439 - 449, XP035049419, ISSN: 1939-1242, DOI: 10.1007/S12155-011-9168-9

## Description

### Field of the invention

The present invention relates to the field of processing and purifying a feedstock. Specifically, the invention solves the problem of removing or reducing demulsifiers from a feedstock, where the demulsifiers have been used e.g. in a previous processing of the feedstock. The feedstock itself comprises lipids of plant or animal origin.

### Background of the invention

US 2,247,359 relates to a process of purifying vegetable and animal oils containing impurities, comprising the steps of mixing measured quantities of oil and acid to effect substantial reaction of the impurities with said acid, thereafter continuously advancing a relatively small stream of the mixture through a heating zone, continuously and rapidly heating the stream as it passes through said zone to a temperature sufficient to facilitate centrifugal separation and promptly centrifugally separating the foots from the neutral oil.

US 2016/145536 relates to corn oil as a possible feedstock and in one embodiment, an acid, such as phosphoric acid, may be added to the crude feedstock in the chemical refining unit with or without additional water. In such a process, the acid and water perform a similar function as in the degumming unit.

WO 2018/024728 relates to a method for purifying a feedstock acid aided heat treatment. The method appears to relate to the employment of the addition of a substance capable of forming a separate phase with impurities present in the feedstock.

US 2017/107452 relates to products produced from distillers corn oil include once refined corn oil product, food grade corn oil product, and free fatty acid product which may be used in a variety of applications. The products have varying specifications for free fatty acid content and moisture content. The applications include food, feed, additives, and manufacture of industrial products.

The present invention provides for a much more efficient, simple, and effective procedure resulting in feedstocks essentially free of demulsifiers or with remarkably reduced amounts of demulsifiers.

### Summary of the invention

As discussed herein, the present invention relates to a method of removing or reducing one or more demulsifying compounds from a feedstock.

Thus, the invention enables facile removal of demulsifiers used in the processing of a feedstock. Specifically, the invention provides for a method applicable in large industrial scale use by the use of a simple and effective method resulting in a very cost efficient procedure.

Essentially, the invention relates to a method for removing or reducing a demulsifier from a feedstock, the method comprising;
a) providing a feedstock comprising lipids of plant or animal origin and one or more demulsifier, wherein the demulsifier is a polysorbate based compound, such as e.g. an ethoxylated sorbitan, or e.g. Polysorbate 20 (polyoxyethylene (20) sorbitan monolaurate), Polysorbate 40 (polyoxyethylene (20) sorbitan monopalmitate), Polysorbate 60 (polyoxyethylene (20) sorbitan monostearate), Polysorbate 80 (polyoxyethylene (20) sorbitan monooleate), or any type of a sorbitan based compound such as e.g. sorbitan monooleate and the likes,
b) optionally adding water to the feedstock in a),
c) adding acid to the feedstock in a) or to the mixture in b) and optionally stirring the mixture at elevated temperature for a period of time,
d) adding a silica based compound to the mixture in c), wherein the silica based compound is a silicone dioxide based compound such as e.g. silicagels or silica xerogels in any form or configuration, or silica alumina gel,
e) optionally subjecting the mixture resulting from step d) to a drying step,
f) separating the silica based compound from the mixture obtained from step d) or e),
g) removing and/or neutralising the acid remaining after step c), d), e) or f), to obtain a feedstock substantially free of the demulsifier, or a feedstock containing a reduced amount of the demulsifier.

Typically, the presence of the one or more demulsifiers in the feedstock to be purified in the method or process according to the invention may be from about 0.05 wt% to about 1 wt%, or up to about 0.8 wt% or about 0.4 wt%.

The demulsifiers according to claim 1 are employed as an emulsion breakers, and are a class of specialty chemicals used to separate emulsions, for example, water in oil. The demulsifiers may be used in any type of processing a feedstock in order to remove any type of undesired compounds from the feedstock which may be necessary for further use or processing of the feedstock.

The feedstock may be of any plant or animal origin and may thus be based on any parts, derivatives or products based on any plants or animals.

The acid may be any type of acid such as e.g. a mineral acid that may in principle be any mineral acid known in the art. There are several non-limiting examples of this such as e.g. sulphuric acid (H₂SO₄), hydrochloric acid (HCl), nitric acid (HNO₃), phosphoric acid (H₃PO₄), boric acid (H₃BO₃), hydrofluoric acid (HF), hydrobromic acid (HBr), perchloric acid (HClO₄), or hydroiodic acid (HI), or any combinations or mixtures thereof.

Other examples of acids that may be used is e.g. methyl sulfonic acid.

Another example may be e.g. ethyl sulfonic acid.

According to the invention, the silica based compound may be any type of silica gel, which may be an amorphous and porous form of silicon dioxide (silica), consisting of an irregular tridimensional framework of alternating silicon and oxygen atoms with nanometer-scale voids and pores. The voids may contain water or some other liquids, or may be filled by gas or vacuum (also referred to as silica xerogel).

According to the process, the silica based compound may be removed or separated from the mixture once the heating step has been considered concluded or completed. Removal or separation of the silica based compound may be effected by filtration, and/or centrifugation and/or settling/sedimentation. In one aspect, removal of the silica based compound may be effected by decantation.

According to the invention, the process may include neutralization of the acid employed in the purification process. The process may alternatively comprise any other method for removing the acid used in the process. In yet another alternative, both a neutralization and other removal method may be employed. An example may be washing the obtained feedstock with e.g. water or an aqueous solution. Neutralization may be performed by any known method in the art and may e.g. comprise addition of a suitable base/alkaline solution, such as e.g. addition of a NaOH solution.

The obtained purified feedstock may be essentially free of any demulsifiers or may contain a reduced amount of demulsifiers. Thus, the purified feedstock may be 100% free of any demulsifiers, or may contain less than e.g. about 20% demulsifiers, or less than about 15%, less than about 10%, less than about 5%, less than about 3%, less than about 1%, less than about 0.5%, or less than about 0.1% demulsifiers measured as wt%, based on the weight of the purified feedstock.

### Definitions

By the term "feedstock" is intended to mean any material based on or originating from any plant or animal origin. It may also refer to any material based on algae or bacteria or fungal material. The term may also specifically comprise any plant oils, plant fats, animal fats and animal oils, and mold oils, selected from e.g. rapeseed oil, canola oil, colza oil, tall oil, sunflower oil, corn oil, technical/distillers corn oil (TCO), soybean oil, hemp oil, olive oil, linseed oil, cottonseed oil, mustard oil, palm oil, palm effluent sludge (PES), arachis oil, castor oil, coconut oil, animal fats such as e.g. suet, tallow, blubber, recycled alimentary fats, starting materials produced by genetic engineering, and biological starting materials produced by microbes such as algae and bacteria and the likes or any combinations or mixtures thereof.

The term "Technical Corn Oil" (TCO) is used specifically to designate the corn oil extracted through the dry milling process. In the dry milling process, corn grains are cleaned and ground directly to obtain a fine corn flour. This flour is then mixed with water, enzymes and other ingredients (cooking and liquefaction) to convert starch into simple sugars, then into glucose (saccharification). This glucose is fermented to produce ethanol, which is then removed by distillation and purified by dehydration. The remaining stillage (called distillers grain) is then processed further to expel technical corn oil (generally called "distillers corn oil" in the United States) through centrifugation. Demulsifiers can be used to enhance separation of the TCO from the rest of the stillage.

The terminology "reduced" is intended to mean that a certain component is present in a lower amount in any material, such as e.g. a feedstock, in relation to its presence in any material prior to any processing or its presence in e.g. a feedstock used as a starting material or raw material in any process. A reduction may this be that one or more components are reduced by 100%, and thus is essentially completely removed, or reduced by at least about 70%, such as e.g. about 75%, such as e.g. about 80%, such as e.g. reduced by at least about 85%, such as e.g. 90%, such as e.g. at least about 95%, such as e.g. at least about 97%, such as e.g. at least about 98%, such as e.g. at least about 99%. Such percentages may be measured as weight% (wt%) or volume% (vol%) and in relation to the total weight of the demulsfiers present in the feedstock prior to the feedstock has gone through and been processed by the method according to the invention. In another aspect of the definition, the reduction is such that the amount of demulsifier is below what is analytically detectable or below e.g. 0.1 wt% based on the weight of the purified feedstock. In another aspect, the demulsifier is reduce by e.g. about 75% to about 80%.

The terminology "acid" is intended to mean any Lewis acid or any chemical compound capable of donating a proton ion. The acid may be a mineral acid or a non-mineral acid such as e.g. sulphuric acid (H₂SO₄), hydrochloric acid (HCl), nitric acid (HNO₃), phosphoric acid (H₃PO₄), boric acid (H₃BO₃), hydrofluoric acid (HF), hydrobromic acid (HBr), perchloric acid (HClO₄), or hydroiodic acid (HI), or e.g. methyl sulfonic acid (CH₃SO₃H), or any combinations or mixtures thereof. In one aspect, the invention relates to a so-called strong acids which dissociate completely in water. Strong acids may be e.g. HCl (hydrochloric acid), H₂SO₄ (sulfuric acid), HNO₃ (nitric acid), HBr (hydrobromic acid), HClO₄ (perchloric acid), HI (hydroiodic acid), p-toluenesulfonic acid, methanesulfonic acid or ethane sulfonic acid. However, any acid having a pKₐ value which is less than about -1 may be regarded as a strong acid (and as measured in either water or DMSO at 25°C).

The terminology "silica based" compound is intended to mean silicon oxide based compounds such as e.g. silicone dioxide based compounds. Further examples are e.g. silicagels or silica xerogels in any form or configuration. A further example is e.g. silica alumina gel. Several varieties of silica based compounds exist on the market such as e.g. Trisyl^{®} etc. which are also included in the terminology.

The terminology "demulsifier" is intended to mean one or more chemicals used to separate emulsions, for example, water in oil and may be e.g. an ethoxylated sorbitan, such as e.g. Polysorbate 20 (polyoxyethylene (20) sorbitan monolaurate), Polysorbate 40 (polyoxyethylene (20) sorbitan monopalmitate), Polysorbate 60 (polyoxyethylene (20) sorbitan monostearate), Polysorbate 80 (polyoxyethylene (20) sorbitan monooleate). The number 20 following the 'polyoxyethylene' part refers to the total number of oxyethylene -(CH₂CH₂O)- groups found in the molecule. The number following the 'polysorbate' part is related to the type of fatty acid associated with the polyoxyethylene sorbitan part of the molecule. Monolaurate is indicated by 20, monopalmitate is indicated by 40, monostearate by 60, and monooleate by 80. In another aspect, the demulsifier may be any type of surfactant such as e.g. a sorbitan based compound. An example is sorbitan monooleate.

### Detailed description of the invention

As mentioned above, the present invention relates to a method of removing or reducing the amount of one or more demulsifiers from a feedstock in accordance with claim 1.

Thus, the present invention by its method enables the use of a feedstock for the preparation of other raw materials such as e.g. fuels and fine chemicals whereby demulsifiers are essentially removed or reduced in the purified feedstock. The present invention thus provides for a simple and effective processing/method of a feedstock for removal of demulsifiers and thus enables a method for use of renewable raw material. The present invention also provides for a simple yet very effective method for removal or reduction of demulsifiers present in a feedstock. This is beneficial from an economic point of view. The invention also provides for a method applicable to large scale removal or reduction of demulsifiers. The amount of demulsifier may be removed to such extent that the further processing of the feedstock is deemed acceptable or possible.

The inventors of the present invention have surprisingly discovered that the employment of strong acids are particularly effective in reducing or removing the demulsifiers present in a feedstock.

In one aspect, the method according to the invention comprises or consists of the steps according to claim 1.

In one aspect, the invention relates to a method being performed or executed in sequential order, such as e.g. step a) is followed by step b), which is then followed by step c) etc.

In a further aspect, the invention relates to a method wherein there are no operations or process steps in between one or more of the method steps as disclosed herein.

The feedstock according to the invention may in principle be any material based on or originating from any plant or animal origin comprising lipids.

Thus, the feedstock according to the invention may be a feedstock used as a starting or raw material for the further production of any type of fuel or fuel component and may serve as a raw material/starting material for the production of renewable fuel. The feedstock may also be a feedstock for the production of any type of fine chemicals. Thus, the feedstock may be also be based on any algae or bacteria or fungal material. Non-limiting examples may be any plant oils, plant fats, animal fats and animal oils, and mold oils, selected from e.g. rapeseed oil, canola oil, colza oil, tall oil, sunflower oil, corn oil, technical/distillers corn oil or any fractions thereof, soybean oil, hemp oil, olive oil, linseed oil, cottonseed oil, mustard oil, palm oil, palm effluent sludge (PES), arachis oil, castor oil, coconut oil, animal fats such as e.g. suet, tallow, blubber, recycled alimentary fats, used cooking oil, starting materials produced by genetic engineering, and biological starting materials produced by microbes such as algae and bacteria and the likes or any combinations or mixtures thereof.

As mentioned herein, the aim with the process is to remove or at least reduce the amount of any demulsifiers present in the feedstock. The demulsifiers may have typically been used in any previous processing of the feedstock.

In one aspect, the demulsifier is a polysorbate, i.e. an ethoxylated sorbitan, such as e.g. Polysorbate 20 (polyoxyethylene (20) sorbitan monolaurate), Polysorbate 40 (polyoxyethylene (20) sorbitan monopalmitate), Polysorbate 60 (polyoxyethylene (20) sorbitan monostearate), Polysorbate 80 (polyoxyethylene (20) sorbitan monooleate).

Alternatively, the demulsifier is a sorbitan based surfactant such as e.g. sorbitan monooleate.

According to the process, the provided feedstock comprising one or more demulsifiers, is optionally contacted with water. This operation is seen in step b) of the process. The amount of added water in step b) is in e.g. an amount of about 1 wt% to about 5 wt%, and preferably about 2 wt% based on the weight of the feedstock. Contacting may be made with any suitable technique such as e.g. mechanical stirring, or agitation etc.

Optionally, the contacting with water in step b) may include allowing the contacting to proceed during a certain period of time. For example, the period of time in question may be e.g. between about 30 seconds to about 1h, such as e.g. about 30 minutes, such as e.g. about 20 minutes, such as e.g. about 15 minutes, such as e.g. about 10 minutes, such as e.g. about 5 minutes, such as e.g. about 3 minutes, such as e.g. about 1 minute.

In one aspect, the period of time may be about 15 minutes and may include mechanical stirring.

Optionally, the contacting with water in step b) may include heating of the mixture. Heating may include heating to any temperature above ambient temperature. In one aspect, the temperature may be between about 30°C to about 200°C, such as e.g. about 40°C, such as e.g. about 50°C, such as e.g. about 60°C, such as e.g. about 70°C, such as e.g. about 80°C, such as e.g. about 90°C, such as e.g. about 100°C, such as e.g. about 110°C, such as e.g. about 130°C, such as e.g. about 150°C, such as e.g. about 170°C, such as e.g. about 200°C.

In one aspect, the temperature is e.g. about 80°C.

Once the feedstock has been provided and contacted with water, optionally heated for a specified period of time as mentioned above, said feedstock is then mixed or contacted with an acid or acidic compound (which is illustrated in step c) of the process). According to the invention, the acid may in principle be any type of Lewis acid or compound capable of donating or liberating a hydrogen ion. Non-limiting examples are e.g. any type of mineral acid, such as e.g. sulphuric acid (H₂SO₄), hydrochloric acid (HCl), nitric acid (HNO₃), phosphoric acid (H₃PO₄), boric acid (H₃BO₃), hydrofluoric acid (HF), hydrobromic acid (HBr), perchloric acid (HClO₄), or hydroiodic acid (HI), or any mixtures thereof.

In one aspect, the acid has a pKₐ (measured in water or DMSO at 25°C) of -1 or less, such as e.g. -2 or less etc.

In a further aspect, the acid may be e.g. sulphuric acid (H₂SO₄), hydrochloric acid (HCl), nitric acid (HNO₃), hydrobromic acid (HBr), perchloric acid (HClO₄), or hydroiodic acid (HI), methanesulfonic acid, ethanesulfonic acid or any mixtures thereof.

In one aspect, the mineral acid is sulphuric acid (H₂SO₄).

Further examples of acids are methyl sulfonic acid (CH₃SO₃H) or ethyl sulphonic acid (CH₃CH₂SO₃H).

In one aspect, the acid may be methyl sulfonic acid (CH₃SO₃H).

In one aspect, the acid is added in an amount of about 0.5 wt% to about 5 wt%, preferably about 1 wt% or about 2 wt%, based on the content of the weight of the feedstock.

According to the process, the acid added to the feedstock may in principle be in any concentration, such as e.g. about at least about 60 vol%, such as e.g. at least about 70 vol%, such as e.g. at least about 80 vol%, such as e.g. at least about 85 vol%, such as e.g. at least about 90 vol%, such as e.g. at least about 95 vol%, such as e.g. at least about 96 vol%, such as e.g. at least about 97 vol%, such as e.g. at least about 98 vol%, or such as e.g. at least about 99 vol%, or such as e.g. at least about 99.5 vol%. The acid may be provided as an aqueous solution in the given concentrations.

The acid may be mixed or contacted with the feedstock by mechanical stirring or agitation.

The stirring or contacting with the acid may proceed for a period of time of about between about 30 seconds to about 1h, such as e.g. about 30 minutes, such as e.g. about 20 minutes, such as e.g. about 15 minutes, such as e.g. about 10 minutes, such as e.g. about 5 minutes, such as e.g. about 3 minutes, such as e.g. about 1 minute.

In one aspect, the period of time may be about 5 minutes and may include mechanical stirring.

Optionally, once the acid is contacted with the feedstock, the resulting mixture may be heated. The heating may be up to any temperature at which the mixture may be processed during the conditions of the method, e.g. to such temperature that the resulting mixture is essentially in a liquid form. In one aspect, the temperature may be between about 30°C to about 200°C, such as e.g. about 40°C, such as e.g. about 50°C, such as e.g. about 60°C, such as e.g. about 70°C, such as e.g. about 80°C, such as e.g. about 90°C, such as e.g. about 100°C, such as e.g. about 110°C, such as e.g. about 130°C, such as e.g. about 150°C, such as e.g. about 170°C, such as e.g. about 200°C.

In one aspect, the temperature is e.g. about 80°C.

A silica based compound is added to the process as illustrated in step d). The addition must provide for a contact between the silica based compound and the acid/feedstock mixture.

Contacting or mixing may be effected by mechanical stirring or agitation.

In one aspect, the silica based compound is added simultaneously with the acid, or alternatively after addition of the acid and after the mixing and heating of the resulting mixture with the feedstock and the acid.

The silica based compound is a silicone dioxide based compound such as e.g. silica gels or silica xerogels in any form or configuration. Another example according to the invention is e.g. silica alumina gel. Several varieties of silica based compounds exist on the market such as e.g. Trisyl^{®} etc. which are also encompassed by present invention.

The silica based compound may be added in an amount of 0.5 wt% to about 5 wt%, preferably about 1 wt% or about 2 wt%, based on the content of the weight of the feedstock.

In one aspect, and optionally, the silica based mixture (mixed with the feedstock and the acid), may be mixed or otherwise contacted for any period of about 5 min to about 90 minutes, preferably about 20 min or about 60 min. Or alternatively for up to about 6h, such as e.g. up to about 5h, such as e.g. up to about 4h, such as e.g. up to about 3h, such as e.g. up to about 2h, such as e.g. up to about 90 minutes, such as e.g. up to about 80 minutes, such as e.g. up to about 70 minutes, such as e.g. up to about 60 minutes, such as e.g. up to about 50 minutes, such as e.g. up to about 40 minutes, such as e.g. up to about 30 minutes, such as e.g. up to about 20 minutes, such as e.g. up to about 10 minutes, such as e.g. up to about 5 minutes. Preferably, the contacting which may be by e.g. mechanical stirring, the contacting time may be about 20 min.

The silica based mixture (mixed with the feedstock and the acid) may also be subjected to reduced pressure. The reduced pressure may in principle be a reduced pressure under normal pressure (1 atm, standard atmospheric pressure corresponding to 1013.25 mbar), such as e.g. at a pressure of about 100 mbar to about 900 mbar, such as e.g. about 200 mbar to about 900 mbar, such as e.g. about 300 mbar to about 900 mbar, such as e.g. about 400 mbar to about 900 mbar, such as e.g. about 500 mbar to about 900 mbar, such as e.g. about 600 mbar to about 900 mbar, such as e.g. about 700 mbar to about 900 mbar, or preferably about 800 mbar.

The silica based mixture (mixed with the feedstock and the acid) may also be heated. The heating may be in the range of in the range of about 30°C to about 200°C, such as e.g. in the range of in the range of about 35°C to about 150°C, such as e.g. in the range of in the range of about 40°C to about 130°C, such as e.g. in the range of in the range of about 50°C to about 120°C, such as e.g. in the range of in the range of about 60°C to about 100°C, such as e.g. in the range of in the range of about 70°C to about 90°C, or about 40°C, about 50°C, about 60°C, about 70°C, about 80°C, about 90°C, about 100°C, about 110°C, about 120°C, about 130°C, about 140°C, about 150°C, about 160°C, about 170°C, about 180°C, about 190°C, or about 200°C. Preferably, the heating is about 80°C.

In one aspect, present invention also relates to an optional step e). The optional step e) comprises a drying step of the mixture resulting from step d).

The drying step optionally following step d) may comprise treating the mixture resulting from step d) at an elevated temperature. Such temperature may be any temperature above ambient temperature, such as e.g. in the range of in the range of about 30°C to about 200°C, such as e.g. in the range of in the range of about 35°C to about 150°C, such as e.g. in the range of in the range of about 40°C to about 130°C, such as e.g. in the range of in the range of about 50°C to about 120°C, such as e.g. in the range of in the range of about 60°C to about 100°C, such as e.g. in the range of in the range of about 70°C to about 90°C, or about 40°C, about 50°C, about 60°C, about 70°C, about 80°C, about 90°C, about 100°C, about 110°C, about 120°C, about 130°C, about 140°C, about 150°C, about 160°C, about 170°C, about 180°C, about 190°C, or about 200°C.

In one aspect, the drying step may comprise treatment at a temperature of about 90°C to about 110°C, preferably about 105°C.

The drying step optionally following step d) may also comprise treatment of the mixture and at reduced pressure. The reduced pressure may in principle be a reduced pressure under normal pressure (1 atm, standard atmospheric pressure corresponding to 1013.25 mbar), such as e.g. at a pressure of about 100 mbar to about 900 mbar, such as e.g. about 200 mbar to about 900 mbar, such as e.g. about 300 mbar to about 900 mbar, such as e.g. about 400 mbar to about 900 mbar, such as e.g. about 500 mbar to about 900 mbar, such as e.g. about 600 mbar to about 900 mbar, such as e.g. about 700 mbar to about 900 mbar, or preferably about 800 mbar, or alternatively at least at 90 mbar, such as e.g. at least 80 mbar, such as e.g. at least 70 mbar, such as e.g. at least 60 mbar, such as e.g. at least 50 mbar, such as e.g. at least 40 mbar, such as e.g. at least 30 mbar, such as e.g. at least 20 mbar, such as e.g. at least 10 mbar, such as e.g. at least 5 mbar, such as e.g. at least 1 mbar.

In one aspect, the reduced pressure may be about 50 mbar to about 100 mbar, or preferably about 80 mbar.

The drying step optionally following step d) may be conducted for any suitable period of time or until deemed sufficient to remove a desired amount of water or until the amount of water left in the mixture is deemed acceptable.

Such period of time may be for a time period of about 5 min to about 90 minutes, preferably about 20 min or about 60 min, or preferably about 15 minutes. Alternatively for up to about 6h, such as e.g. up to about 5h, such as e.g. up to about 4h, such as e.g. up to about 3h, such as e.g. up to about 2h, such as e.g. up to about 90 minutes, such as e.g. up to about 80 minutes, such as e.g. up to about 70 minutes, such as e.g. up to about 60 minutes, such as e.g. up to about 50 minutes, such as e.g. up to about 40 minutes, such as e.g. up to about 30 minutes, such as e.g. up to about 20 minutes, such as e.g. up to about 10 minutes, such as e.g. up to about 5 minutes.

In one aspect, the period of time may be during any time period of about 5 min to about 60 min, or preferably about 15 min or about 45 min.

According to the invention, the silica based compound is removed or separated from the feedstock by any suitable method known in the art in step f), and thus the silica based compound is separated from the mixture obtained from step d) or e).

Separation of the silica based compound may be conducted by filtration, sedimentation/settling, centrifugation, or decantation or any combinations thereof. Alternatively, the removal of the silica based compound may be performed under vacuum or reduced pressure such as e.g. a reduced pressure under normal pressure (1 atm, standard atmospheric pressure corresponding to 1013.25 mbar), such as e.g. at a pressure of about 100 mbar to about 900 mbar, such as e.g. about 200 mbar to about 900 mbar, such as e.g. about 300 mbar to about 900 mbar, such as e.g. about 400 mbar to about 900 mbar, such as e.g. about 500 mbar to about 900 mbar, such as e.g. about 600 mbar to about 900 mbar, such as e.g. about 700 mbar to about 900 mbar, or preferably about 800 mbar, or alternatively at least at 90 mbar, such as e.g. at least 80 mbar, such as e.g. at least 70 mbar, such as e.g. at least 60 mbar, such as e.g. at least 50 mbar, such as e.g. at least 40 mbar, such as e.g. at least 30 mbar, such as e.g. at least 20 mbar, such as e.g. at least 10 mbar, such as e.g. at least 5 mbar, such as e.g. at least 1 mbar.

The acid added to the process is removed from the treated mixture by any suitable means. This step is illustrated by step g) according to the invention. In one aspect, the acid is removed by neutralization by addition of a basic/alkaline compound of solution. In another aspect, the acid is removed by washing the mixture with e.g. water or a suitable aqueous solution. In yet a further aspect, the acid is removed by both neutralization and washing in any order.

The neutralizing agent may in principle be any suitable base, such as e.g. NaOH, KOH, Ca(OH)₂ etc. or an aqueous solution thereof.The aqueous solution may in principle have any concentration of the basic/alkaline compound to such an extent that the final water content does not result in an excessive amount of water to be removed further on in any following process. The concentration may be e.g. about 50 wt% or more, such as e.g. 60wt% or more, such as e.g. 70wt% or more, such as e.g. 80wt% or more, etc.

According to the invention, the amount of demulsifier in the feedstock or feedstock matrix may be reduced by at least about 20 wt%, such as e.g. about 30 wt%, such as e.g. about 40 wt%, such as e.g. about 50 wt%, such as e.g. about 60 wt%, such as e.g. about 70 wt%, such as e.g. about 80 wt%, such as e.g. about 90 wt%, such as e.g. about 95 wt%, such as e.g. about 98 wt%, or at least essentially free of any demulsifiers in the feedstock or feedstock matrix in relation to the demulsifiers present in the feedstock prior to the processing according to the method according to the invention.

In one aspect, the amount of demulsifiers is removed to the extent that the amount is below what is possible to detect by any analytical method known in the art. In one aspect, the demulsifier is present in an amount of less than about 0.1 wt% after the feedstock has been purified according to the invention.

The advantage with present invention is that apart from being very effective and simple as well as being useful in large scale industrial production, is that the invention enables us of more challenging low-quality feedstocks, such as e.g. using TCO in higher amounts. The method may also be employed in respect of TCO-low-quality AF blends.

### Examples

In the following, the invention is illustrated by the following example.

### Example 1

A typical treatment protocol for strong acid treatment is according to the steps:
1. Stir feed (100 g) with magnetic stirrer in round bottom flask at 80 °C
2. Add water (2 mL)
3. Stir 15 min at 80 °C
4. Add H₂SO₄ (95-97 %, 1 g, 10,2 mmol, 0,56 mL)
5. Stir 5 min at 80 °C
6. Add amorphous silica absorbent (2 g)
6a. Optionally, stir 20 min at 80 °C at 800 mbar
6b. Optionally , stir 15 min at 105 °C at 80 mbar
7. Remove amorphous silica absorbent by filtration (2 µm) at 70 °C at vacuum by Buchner filtration.
8. Wash oil phase with water (2 x 20 ml) and separate water layer in separation funnel
9. Check that pH of last water wash is rather neutral (pH -above 3)
10. Optionally, Centrifuge the oil at 4400 rpm/ 50 °C / 20 min and separate any solids/water

In another example, the above protocol was followed and compared with methods not including strong acid treatment with the results as seen below:

| **Treatment / sample** | **Polysorbate (wt-%)** |
|---|---|
| TCO feed | 0,33 |
| Heat treatment | 0,33 |
| Strong acid treatment | < 0.1 |
| 3-fold extraction with citric acid solution (2000 mg/kg) | 0,21 |
| Acid degumming | 0,27 |
| 0.45µm membrane filtration at 80 °C | 0,32 |
| Pre-filtration with conventional filter aid at 80 °C | 0,33 |
| Pre-filtration with adsorptive filter aid at 80 °C | 0,28 |
| Pre-filtration with adsorptive filter aid at room temperature | 0,19 |
| Bleaching 1 % adsorbent | 0,23 |

The results seen above clearly illustrates the superior results obtained by employment of treatment with strong acids.

## Claims

1. A method for removing or reducing a demulsifier from a feedstock, the method comprising;
a) providing a feedstock comprising lipids of plant or animal origin and one or more demulsifier, wherein the demulsifier is a polysorbate based compound, such as e.g. an ethoxylated sorbitan, or e.g. Polysorbate 20 (polyoxyethylene (20) sorbitan monolaurate), Polysorbate 40 (polyoxyethylene (20) sorbitan monopalmitate), Polysorbate 60 (polyoxyethylene (20) sorbitan monostearate), Polysorbate 80 (polyoxyethylene (20) sorbitan monooleate), or any type of a sorbitan based compound such as e.g. sorbitan monooleate and the likes,
b) optionally adding water to the feedstock in a),
c) adding acid to the feedstock in a) or to the mixture in b) and optionally stirring the mixture at elevated temperature for a period of time,
d) adding a silica based compound to the mixture in c), wherein the silica based compound is a silicone dioxide based compound such as e.g. silicagels or silica xerogels in any form or configuration, or silica alumina gel,
e) optionally subjecting the mixture resulting from step d) to a drying step,
f) separating the silica based compound from the mixture obtained from step d) or e),
g) removing and/or neutralising the acid remaining after step c), d), e) or f), to obtain a feedstock substantially free of the demulsifier, or a feedstock containing a reduced amount of the demulsifier.

2. The method according to claim 1, wherein the feedstock is e.g. plant oils, plant fats, animal fats and animal oils, and mould oils, selected from e.g. rapeseed oil, canola oil, colza oil, tall oil, sunflower oil, soybean oil, hemp oil, olive oil, linseed oil, cottonseed oil, mustard oil, palm oil, palm effluent sludge (PES), technical corn oil (TCO) comprising any fractions thereof, arachis oil, castor oil, coconut oil, animal fats such as e.g. suet, tallow, blubber, recycled alimentary fats, starting materials produced by genetic engineering, and biological starting materials produced by microbes such as algae and bacteria and the likes or any combinations or mixtures thereof.

3. The method according to any of the preceding claims, wherein the acid has a pKₐ of less than about -1.

4. The method according to any of the preceding claims, wherein the acid is e.g. sulphuric acid (H₂SO₄), hydrochloric acid (HCl), nitric acid (HNO₃), phosphoric acid (H₃PO₄), boric acid (H₃BO₃), hydrofluoric acid (HF), hydrobromic acid (HBr), perchloric acid (HClO₄), or hydroiodic acid (HI), or e.g. methyl sulfonic acid (CH₃SO₃H), or any combinations or mixtures thereof.

5. The method according to any of the preceding claims, wherein the acid is sulphuric acid (H₂SO₄) or methyl sulfonic acid (CH₃SO₃H) or a mixture thereof.

6. The method according to any of the preceding claims, wherein the heating (the elevated temperature) in step c) is conducted for a period of time of about between about 30 seconds to about 1h, such as e.g. about 30 minutes, such as e.g. about 20 minutes, such as e.g. about 15 minutes, such as e.g. about 10 minutes, such as e.g. about 5 minutes, such as e.g. about 3 minutes, such as e.g. about 1 minute, and wherein heating is at any temperature at which the mixture may be processed during the conditions of the method, e.g. to such temperature that the resulting mixture is essentially in a liquid form, or e.g. temperature may be between about 30°C to about 200°C, such as e.g. about 40°C, such as e.g. about 50°C, such as e.g. about 60°C, such as e.g. about 70°C, such as e.g. about 80°C, such as e.g. about 90°C, such as e.g. about 100°C, such as e.g. about 110°C, such as e.g. about 130°C, such as e.g. about 150°C, such as e.g. about 170°C, such as e.g. about 200°C.

7. The method according to claim 6, where the heating is conducted at a reduced pressure of of about 100 mbar to about 900 mbar, such as e.g. about 200 mbar to about 900 mbar, such as e.g. about 300 mbar to about 900 mbar, such as e.g. about 400 mbar to about 900 mbar, such as e.g. about 500 mbar to about 900 mbar, such as e.g. about 600 mbar to about 900 mbar, such as e.g. about 700 mbar to about 900 mbar, or preferably about 800 mbar.

8. The method according to any of the preceding claims, wherein step c) is optionally followed by a drying step in step e), comprising one or more of the reaction conditions;
i) temperatures in the range of about 30°C to about 200°C, such as e.g. in the range of about 35°C to about 150°C, such as e.g. in the range of in the range of about 40°C to about 130°C, such as e.g. in the range of in the range of about 50°C to about 120°C, such as e.g. in the range of in the range of about 60°C to about 100°C, such as e.g. in the range of in the range of about 70°C to about 90°C, or about 40°C, about 50°C, about 60°C, about 70°C, about 80°C, about 90°C, about 100°C, about 110°C, about 120°C, about 130°C, about 140°C, about 150°C, about 160°C, about 170°C, about 180°C, about 190°C, or about 200°C,
ii) and/or reduced pressure, such as e.g. at a pressure of about 100 mbar to about 900 mbar, such as e.g. about 200 mbar to about 900 mbar, such as e.g. about 300 mbar to about 900 mbar, such as e.g. about 400 mbar to about 900 mbar, such as e.g. about 500 mbar to about 900 mbar, such as e.g. about 600 mbar to about 900 mbar, such as e.g. about 700 mbar to about 900 mbar, or preferably about 800 mbar, or alternatively at least at 90 mbar, such as e.g. at least 80 mbar, such as e.g. at least 70 mbar, such as e.g. at least 60 mbar, such as e.g. at least 50 mbar, such as e.g. at least 40 mbar, such as e.g. at least 30 mbar, such as e.g. at least 20 mbar, such as e.g. at least 10 mbar, such as e.g. at least 5 mbar, such as e.g. at least 1 mbar,
iii) and wherein the drying step is conducted for a period of time of about 5 min to about 90 minutes, preferably about 20 min or about 60 min, or preferably about 15 minutes, or for up to about 6h, such as e.g. up to about 5h, such as e.g. up to about 4h, such as e.g. up to about 3h, such as e.g. up to about 2h, such as e.g. up to about 90 minutes, such as e.g. up to about 80 minutes, such as e.g. up to about 70 minutes, such as e.g. up to about 60 minutes, such as e.g. up to about 50 minutes, such as e.g. up to about 40 minutes, such as e.g. up to about 30 minutes, such as e.g. up to about 20 minutes, such as e.g. up to about 10 minutes, such as e.g. up to about 5 minutes.

9. The method according to any of the preceding claims, wherein the acid is added in an amount of about 0.5 wt% to about 5 wt%, preferably about 1 wt% or about 2 wt%, based on the content of the weight of the feedstock.

10. The method according to any of the preceding claims, wherein the silica based compound is added in an amount of 0.5 wt% to about 5 wt%, preferably about 1 wt% or about 2 wt%, based on the content of the weight of the feedstock.

11. The method according to any of the preceding claims, wherein the water added in step b) is in an amount of about 1 wt% to about 5 wt%, and preferably 2 wt%.

12. The method according to any of the preceding claims, wherein the silica based compound is removed in step f) by e.g. filtration, settling, centrifugation, decantation or any combinations thereof, and optionally under vacuum or reduced pressure.

13. The method according to any of the preceding claims, wherein the acid is removed by water washing and/or neutralization in step g), by addition of a suitable base, such as e.g. NaOH or KOH or any aqueous solutions thereof, whereby the pH of the feedstock is set to a pH in range of about 3 to about 8, such as e.g. about 4, about 5, about 6, about 6.5, about 7, about 7.5.

14. The method according to any of the preceding claims, wherein the amount of demulsifier is reduced below levels which may be detected by any analytical method, or present in an amount of less than about 0.1 wt%, or reduced by at least about 75% in relation to non-purified feedstock, such as e.g. at least 80%, at least 85%, at least 90%, at least 95%, at least 98% or e.g. at least 99% or more.

15. The method according to any of the preceding claims, wherein the amount of demulsifier present in the feedstock in step a) is from about 0.05 wt% to about 1 wt%, or preferably about 0.4 wt% or about 0.8 wt% or more.

## Patentansprüche

1. Verfahren zum Entfernen oder Reduzieren eines Demulgators aus einem Einsatzstoff, wobei das Verfahren Folgendes umfasst;
a) Bereitstellen eines Einsatzstoffs, der Lipide pflanzlichen oder tierischen Ursprungs und einen oder mehrere Demulgatoren umfasst, wobei der Demulgator eine Polysorbat-basierte Verbindung ist, wie etwa beispielsweise ein ethoxyliertes Sorbitan oder beispielsweise Polysorbat 20 (Polyoxyethylen(20)-sorbitan-monolaurat), Polysorbat 40 (Polyoxyethylen(20)-sorbitan-monopalmitat), Polysorbat 60 (Polyoxyethylen(20)-sorbitan-monostearat), Polysorbat 80 (Polyoxyethylen(20)-sorbitan-monooleat) oder eine beliebige Art einer Sorbitanbasierten Verbindung, wie etwa beispielsweise Sorbitanmonooleat oder Ähnliche,
b) optional Hinzufügen von Wasser zu dem Einsatzstoff in a),
c) Hinzufügen von Säure zu dem Einsatzstoff in a) oder zu der Mischung in b) und optional Rühren der Mischung bei erhöhter Temperatur über einen Zeitraum,
d) Hinzufügen einer Siliciumdioxid-basierten Verbindung zu der Mischung in c), wobei die Siliciumdioxid-basierte Verbindung eine Silicondioxid-basierte Verbindung wie etwa beispielsweise Silicagele oder Siliciumdioxid-Xerogele in einer beliebigen Form oder Konfiguration oder Siliciumdioxid-Aluminiumdioxidgel ist,
e) optional Unterwerfen der Mischung, die sich aus Schritt d) ergibt, einem Trocknungsschritt,
f) Trennen der Siliciumdioxid-basierten Verbindung von der Mischung, die aus Schritt d) oder e) erlangt wird,
g) Entfernen und/oder Neutralisieren der Säure, die nach Schritt c), d), e) oder f) zurückbleibt, um einen Einsatzstoff, der im Wesentlichen frei von dem Demulgator ist, oder einen Einsatzstoff, der eine reduzierte Menge des Demulgators enthält, zu erlangen.

2. Verfahren nach Anspruch 1, wobei der Einsatzstoff beispielsweise pflanzliche Öle, pflanzliche Fette, tierische Fette und tierische Öle und Trennöle sind, die beispielsweise aus Rapssamenöl, Rapsöl, Colzaöl, Tallöl, Sonnenblumenöl, Sojabohnenöl, Hanföl, Olivenöl, Leinsamenöl, Baumwollsamenöl, Senföl, Palmöl, Palmrestproduktschlamm (PES), technischem Maisöl, das beliebige Fraktionen dieses umfasst, Erdnussöl, Rizinusöl, Kokosnussöl, tierischen Fetten wie beispielsweise Talg, Unschlitt, Blubber, recycelten Lebensmittelfetten, Ausgangsmaterialien, die durch gentechnische Prozesse hergestellt wurden, und biologische Ausgangsmaterialien, die durch Mikroben wie Algen und Bakterien und Ähnliche hergestellt wurden, oder beliebigen Kombinationen oder Mischungen dieser ausgewählt sind.

3. Verfahren nach einem der vorhergehenden Ansprüche, wobei die Säure eine pKₐ von weniger als -1 aufweist.

4. Verfahren nach einem der vorhergehenden Ansprüche, wobei die Säure beispielsweise Schwefelsäure (H₂SO₄), Salzsäure (HCl), Salpetersäure (HNO₃), Phosphorsäure (H₃PO₄), Borsäure (H₃BO₃), Flusssäure (HF), Bromwasserstoffsäure (HBr), Perchlorsäure (HClO₄) oder Iodwasserstoffsäure (HI) oder beispielsweise Methylsulfonsäure (CH₃SO₃H) oder beliebige Kombinationen oder Mischungen dieser ist.

5. Verfahren nach einem der vorhergehenden Ansprüche, wobei die Säure Schwefelsäure (H₂SO₄) oder Methylsulfonsäure (CH₃SO₃H) oder eine Mischung dieser ist.

6. Verfahren nach einem der vorhergehenden Ansprüche, wobei das Erhitzen (die erhöhte Temperatur) in Schritt c) über einen Zeitraum von ca. zwischen ca. 30 Sekunden bis ca. 1 Stunde, wie etwa beispielsweise ca. 30 Minuten, wie etwa beispielsweise ca. 20 Minuten, wie etwa beispielsweise ca. 15 Minuten, wie etwa beispielsweise ca. 10 Minuten, wie etwa beispielsweise ca. 5 Minuten, wie etwa beispielsweise ca. 3 Minuten, wie etwa beispielsweise ca. 1 Minute, durchgeführt wird und wobei das Erhitzen auf eine beliebige Temperatur erfolgt, bei der die Mischung unter den Bedingungen des Verfahrens weiterverarbeitet werden kann, beispielsweise auf eine solche Temperatur, dass die sich ergebende Mischung weitgehend in einer flüssigen Form vorliegt, oder beispielsweise kann eine Temperatur bei zwischen ca. 30 °C bis ca. 200 °C, wie etwa beispielsweise ca. 40 °C, wie etwa beispielsweise ca. 50 °C, wie etwa beispielsweise ca. 60 °C, wie etwa beispielsweise ca. 70 °C, wie etwa beispielsweise ca. 80 °C, wie etwa beispielsweise ca. 90 °C, wie etwa beispielsweise ca. 100 °C, wie etwa beispielsweise ca. 110 °C, wie etwa beispielsweise ca. 130 °C, wie etwa beispielsweise ca. 150 °C, wie etwa beispielsweise ca. 170 °C, wie etwa beispielsweise ca. 200 °C liegen.

7. Verfahren nach Anspruch 6, wobei das Erhitzen bei einem reduzierten Druck von von ca. 100 mbar bis ca. 900 mbar, wie etwa beispielsweise ca. 200 mbar bis ca. 900 mbar, wie etwa beispielsweise ca. 300 mbar bis ca. 900 mbar, wie etwa beispielsweise ca. 400 mbar bis ca. 900 mbar, wie etwa beispielsweise ca. 500 mbar bis ca. 900 mbar, wie etwa beispielsweise ca. 600 mbar bis ca. 900 mbar, wie etwa beispielsweise ca. 700 mbar bis ca. 900 mbar oder bevorzugt ca. 800 mbar durchgeführt wird.

8. Verfahren nach einem der vorhergehenden Ansprüche, wobei auf den Schritt c) optional ein Trocknungsschritt in Schritt e) folgt, der eine oder mehrere der Reaktionsbedingungen umfasst;
i) Temperaturen im Bereich von ca. 30 °C bis ca. 200 °C, wie etwa beispielsweise im Bereich von ca. 35 °C bis ca. 150 °C, wie etwa beispielsweise im Bereich von im Bereich von ca. 40 °C bis ca. 130 °C, wie etwa beispielsweise im Bereich von im Bereich von ca. 50 °C bis ca. 120 °C, wie etwa beispielsweise im Bereich von im Bereich von ca. 60 °C bis ca. 100 °C, wie etwa beispielsweise im Bereich von im Bereich von ca. 70 °C bis ca. 90 °C, oder ca. 40 °C, ca. 50 °C, ca. 60 °C, ca. 70 °C, ca. 80 °C, ca. 90 °C, ca. 100 °C, ca. 110 °C, ca. 120 °C, ca. 130 °C, ca. 140 °C, ca. 150 °C, ca. 160 °C, ca. 170 °C, ca. 180 °C, ca. 190 °C oder ca. 200 °C,
ii) und/oder reduzierten Druck, wie etwa beispielsweise bei einem Druck von ca. 100 mbar bis ca. 900 mbar, wie etwa beispielsweise ca. 200 mbar bis ca. 900 mbar, wie etwa beispielsweise ca. 300 mbar bis ca. 900 mbar, wie etwa beispielsweise ca. 400 mbar bis ca. 900 mbar, wie etwa beispielsweise ca. 500 mbar bis ca. 900 mbar, wie etwa beispielsweise ca. 600 mbar bis ca. 900 mbar, wie etwa beispielsweise ca. 700 mbar bis ca. 900 mbar oder bevorzugt ca. 800 mbar oder alternativ mindestens 90 mbar, wie etwa beispielsweise mindestens 80 mbar, wie etwa beispielsweise mindestens 70 mbar, wie etwa beispielsweise mindestens 60 mbar, wie etwa beispielsweise mindestens 50 mbar, wie etwa beispielsweise mindestens 40 mbar, wie etwa beispielsweise mindestens 30 mbar, wie etwa beispielsweise mindestens 20 mbar, wie etwa beispielsweise mindestens 10 mbar, wie etwa beispielsweise mindestens 5 mbar, wie etwa beispielsweise mindestens 1 mbar,
iii) und wobei der Trocknungsschritt über einen Zeitraum von ca. 5 Min. bis ca. 90 Minuten, bevorzugt ca. 20 Min. oder ca. 60 Min., oder bevorzugt ca. 15 Minuten oder für bis zu 6 Std., wie etwa beispielsweise bis zu ca. 5 Std., wie etwa beispielsweise bis zu ca. 4 Std., wie etwa beispielsweise bis zu ca. 3 Std., wie etwa beispielsweise bis zu ca. 2 Std., wie etwa beispielsweise bis zu ca. 90 Minuten, wie etwa beispielsweise bis ca. 80 Minuten, wie etwa beispielsweise bis ca. 70 Minuten, wie etwa beispielsweise bis ca. 60 Minuten, wie etwa beispielsweise bis ca. 50 Minuten, wie etwa beispielsweise bis ca. 40 Minuten, wie etwa beispielsweise bis ca. 30 Minuten, wie etwa beispielsweise bis ca. 20 Minuten, wie etwa beispielsweise bis ca. 10 Minuten, wie etwa beispielsweise bis ca. 5 Minuten, durchgeführt wird.

9. Verfahren nach einem der vorhergehenden Ansprüche, wobei die Säure in einer Menge von ca. 0,5 Gew.-% bis ca. 5 Gew.-%, bevorzugt ca. 1 Gew.-% oder ca. 2 Gew.-%, basierend auf dem Inhalt des Gewichts des Einsatzstoffes, hinzugefügt wird.

10. Verfahren nach einem der vorhergehenden Ansprüche, wobei die Siliciumdioxid-basierte Verbindung in einer Menge von 0,5 Gew.-% bis ca. 5 Gew.-%, bevorzugt ca. 1 Gew.-% oder ca. 2 Gew.-%, basierend auf dem Inhalt des Gewichts des Einsatzstoffes, hinzugefügt wird.

11. Verfahren nach einem der vorhergehenden Ansprüche, wobei das Wasser, das in Schritt b) hinzugefügt wird, eine Menge von ca. 1 Gew.-% bis ca. 5 Gew.-% und bevorzugt von ca. 2 Gew.-% hat.

12. Verfahren nach einem der vorhergehenden Ansprüche, wobei die Siliciumdioxid-basierte Verbindung in Schritt f) beispielsweise durch Filtration, Absetzen, Zentrifugation, Dekantation oder beliebige Kombinationen dieser und optional im Vakuum oder bei reduziertem Druck entfernt wird.

13. Verfahren nach einem der vorhergehenden Ansprüche, wobei die Säure in Schritt g) durch Wasserwaschen und/oder Neutralisation durch Hinzufügen einer geeigneten Base, wie etwa beispielsweise NaOH oder KOH oder einer beliebigen wässrigen Lösung dieser, entfernt wird, wobei der pH-Wert des Einsatzstoffs auf einen pH-Wert im Bereich von ca. 3 bis 8, wie etwa beispielsweise ca. 4, ca. 5, ca. 6, ca. 6,5, ca. 7, ca. 7,5 eingestellt wird.

14. Verfahren nach einem der vorhergehenden Ansprüche, wobei die Menge eines Demulgators auf unterhalb von Niveaus reduziert wird, die durch ein beliebiges analytisches Verfahren bestimmt werden können, oder in einer Menge von weniger als 0,1 Gew.-% vorliegt oder im Vergleich zu einem nicht-purifizierten Einsatzstoff um mindestens ca. 75 %, wie etwa beispielsweise um mindestens 80 %, mindestens 85 %, mindestens 90 %, mindestens 95 %, mindestens 98 % oder beispielsweise mindestens 99 % oder mehr, reduziert ist.

15. Verfahren nach einem der vorhergehenden Ansprüche, wobei die Menge eines Demulgators, die in dem Einsatzstoff in Schritt a) vorhanden ist, bei von ca. 0,05 Gew.-% bis ca. 1 Gew.-% oder bevorzugt bei ca. 0,4 Gew.-% oder ca. 0,8 Gew.-% oder mehr liegt.

## Revendications

1. Procédé d'élimination ou de réduction d'un désémulsifiant d'une matière première, le procédé comprenant :
a) la fourniture d'une matière première comprenant des lipides d'origine végétale ou animale et un ou plusieurs désémulsifiants, le désémulsifiant étant un composé à base de polysorbate, tel que par exemple un sorbitan éthoxylé, ou par exemple Polysorbate 20 (monolaurate de polyoxyéthylène (20) sorbitan), Polysorbate 40 (monopalmitate de polyoxyéthylène (20) sorbitan), Polysorbate 60 (monostéarate de polyoxyéthylène (20) sorbitan), Polysorbate 80 (monooléate de polyoxyéthylène (20) sorbitan), ou tout type de composé à base de sorbitan tel que par exemple le monooléate de sorbitan et similaires,
b) l'ajout éventuel de l'eau à la matière première dans a),
c) l'ajout d'acide à la matière première dans a) ou au mélange dans b) et l'agitation éventuelle du mélange à température élevée pendant un certain temps,
d) l'ajout d'un composé à base de silice au mélange dans c), dans lequel le composé à base de silice est un composé à base de dioxyde de silicone tel que par exemple des gels de silice ou des xérogels de silice sous n'importe quelle forme ou configuration, ou un gel de silice alumine,
e) la soumission éventuelle du mélange résultant de l'étape d) à une étape de séchage,
f) la séparation du composé à base de silice du mélange obtenu dans l'étape d) ou e),
g) l'élimination et/ou la neutralisation de l'acide restant après l'étape c), d), e) ou f), pour obtenir une charge d'alimentation sensiblement exempte du désémulsifiant, ou une charge d'alimentation contenant une quantité réduite du désémulsifiant.

2. Procédé selon la revendication 1, dans lequel la matière première est par exemple des huiles végétales, des graisses végétales, des graisses animales et des huiles animales, et des huiles de moisissures, choisies parmi par exemple l'huile de colza, l'huile de canola, l'huile de colza, le tallöl, l'huile de tournesol, l'huile de soja, l'huile de chanvre, l'huile d'olive, l'huile de lin, l'huile de coton, l'huile de moutarde, l'huile de palme, les boues d'effluents de palme (PES), l'huile de maïs technique (TCO) comprenant toutes les fractions de celles-ci, l'huile d'arachide, l'huile de ricin, l'huile de coco, les graisses animales telles que par exemple le saindoux, le suif, la graisse, les graisses alimentaires recyclées, les matières premières produites par génie génétique, et les matières premières biologiques produites par des microbes tels que les algues et les bactéries et similaires ou toutes combinaisons ou mélanges de ceux-ci.

3. Procédé selon l'une quelconque des revendications précédentes, dans lequel l'acide a un pKₐ inférieur à environ - 1.

4. Procédé selon l'une quelconque des revendications précédentes, dans lequel l'acide est par exemple l'acide sulfurique (H₂SO₄), l'acide chlorhydrique (HCl), l'acide nitrique (HNO₃), l'acide phosphorique (H₃PO₄), l'acide borique (H₃BO₃), l'acide fluorhydrique (HF), l'acide bromhydrique (HBr), l'acide perchlorique (HClO₄), ou l'acide iodhydrique (HI), ou par exemple l'acide méthylsulfonique (CH₃SO₃H), ou toute combinaison ou mélange de ceux-ci.

5. Procédé selon l'une quelconque des revendications précédentes, dans lequel l'acide est l'acide sulfurique (H₂SO₄) ou l'acide méthylsulfonique (CH₃SO₃H) ou un mélange de ceux-ci.

6. Procédé selon l'une quelconque des revendications précédentes, dans lequel le chauffage (la température élevée) à l'étape c) est effectué pendant une période de temps comprise entre environ 30 secondes et environ 1 heure, par exemple environ 30 minutes, par exemple environ 20 minutes, par exemple environ 15 minutes, par exemple environ 10 minutes, par exemple environ 5 minutes, par exemple environ 3 minutes, par exemple environ 1 minute, et dans lequel le chauffage est effectué à n'importe quelle température à laquelle le mélange peut être traité dans les conditions du procédé, par exemple à une température telle que le mélange résultant soit essentiellement sous forme liquide, ou par exemple la température peut être comprise entre environ 30 °C et environ 200 °C, par exemple environ 40 °C, par exemple environ 50 °C, par exemple environ 60 °C, par exemple environ 70 °C, par exemple environ 80 °C, par exemple environ 90 °C, par exemple environ 100°C, par exemple environ 110°C, par exemple environ 130°C, par exemple environ 150°C, par exemple environ 170°C, par exemple environ 200°C.

7. Procédé selon la revendication 6, dans lequel le chauffage est effectué à une pression réduite d'environ 100 mbar à environ 900 mbar, telle que par exemple d'environ 200 mbar à environ 900 mbar, telle que par exemple d'environ 300 mbar à environ 900 mbar, telle que par exemple d'environ 400 mbar à environ 900 mbar, telle que par exemple d'environ 500 mbar à environ 900 mbar, telle que par exemple d'environ 600 mbar à environ 900 mbar, telle que par exemple d'environ 700 mbar à environ 900 mbar, ou de préférence d'environ 800 mbar.

8. Procédé selon l'une quelconque des revendications précédentes, dans lequel l'étape c) est éventuellement suivie d'une étape de séchage à l'étape e), comprenant une ou plusieurs des conditions réactionnelles ;
i) Des températures dans la plage d'environ 30°C à environ 200°C, telles que par exemple dans la plage d'environ 35°C à environ 150°C, telles que par exemple dans la plage d'environ 40°C à environ 130°C, telles que par exemple dans la plage d'environ 50°C à environ 120°C, telles que par exemple dans la plage d'environ 60°C à environ 100°C, telles que par exemple dans la plage d'environ 70°C à environ 90°C, ou environ 40°C, environ 50°C, environ 60°C, environ 70°C, environ 80°C, environ 90°C, environ 100°C, environ 110°C, environ 120°C, environ 130°C, environ 140°C, environ 150°C, environ 160°C, environ 170°C, environ 180°C, environ 190°C ou environ 200°C,
ii) et/ou une pression réduite, par exemple à une pression d'environ 100 mbar à environ 900 mbar, par exemple d'environ 200 mbar à environ 900 mbar, par exemple d'environ 300 mbar à environ 900 mbar, par exemple d'environ 400 mbar à environ 900 mbar, par exemple d'environ 500 mbar à environ 900 mbar, par exemple d'environ 600 mbar à environ 900 mbar, par exemple d'environ 700 mbar à environ 900 mbar, ou de préférence d'environ 800 mbar, ou en variante d'au moins 90 mbar, par exemple d'au moins 80 mbar, par exemple d'au moins 70 mbar, par exemple d'au moins 60 mbar, par exemple d'au moins 50 mbar, par exemple d'au moins 40 mbar, par exemple d'au moins 30 mbar, par exemple d'au moins 20 mbar, par exemple au moins 10 mbar, par exemple d'au moins 5 mbar, par exemple d'au moins 1 mbar,
iii) et dans lequel l'étape de séchage est réalisée pendant une période de temps d'environ 5 min à environ 90 minutes, de préférence d'environ 20 min ou d'environ 60 min, ou de préférence d'environ 15 minutes, ou jusqu'à environ 6 h, par exemple jusqu'à environ 5 h, par exemple jusqu'à environ 4 h, par exemple jusqu'à environ 3 h, par exemple jusqu'à environ 2 h, par exemple jusqu'à environ 90 minutes, par exemple jusqu'à environ 80 minutes, par exemple jusqu'à environ 70 minutes, par exemple jusqu'à environ 60 minutes, par exemple jusqu'à environ 50 minutes, par exemple jusqu'à environ 40 minutes, par exemple jusqu'à environ 30 minutes, par exemple jusqu'à environ 20 minutes, par exemple jusqu'à environ 10 minutes, par exemple jusqu'à environ 5 minutes.

9. Procédé selon l'une quelconque des revendications précédentes, dans lequel l'acide est ajouté en une quantité d'environ 0,5 % en poids à environ 5 % en poids, de préférence environ 1 % en poids ou environ 2 % en poids, sur la base de la teneur en poids de la matière première.

10. Procédé selon l'une quelconque des revendications précédentes, dans lequel le composé à base de silice est ajouté en une quantité de 0,5 % en poids à environ 5 % en poids, de préférence environ 1 % en poids ou environ 2 % en poids, sur la base de la teneur en poids de la charge d'alimentation.

11. Procédé selon l'une quelconque des revendications précédentes, dans lequel l'eau ajoutée à l'étape b) est en une quantité d'environ 1 % en poids à environ 5 % en poids, et de préférence 2 % en poids.

12. Procédé selon l'une quelconque des revendications précédentes, dans lequel le composé à base de silice est éliminé à l'étape f) par exemple par filtration, sédimentation, centrifugation, décantation ou toute combinaison de celles-ci, et éventuellement sous vide ou sous pression réduite.

13. Procédé selon l'une quelconque des revendications précédentes, dans lequel l'acide est éliminé par lavage à l'eau et/ou neutralisation à l'étape g), par addition d'une base appropriée, telle que par exemple NaOH ou KOH ou toute solution aqueuse de ceux-ci, moyennant quoi le pH de la charge d'alimentation est réglé à un pH dans la plage d'environ 3 à environ 8, tel que par exemple environ 4, environ 5, environ 6, environ 6,5, environ 7, environ 7,5.

14. Procédé selon l'une quelconque des revendications précédentes, dans lequel la quantité de désémulsifiant est réduite en dessous des niveaux qui peuvent être détectés par n'importe quelle méthode analytique, ou présente en une quantité inférieure à environ 0,1 % en poids, ou réduite d'au moins environ 75 % par rapport à la charge d'alimentation non purifiée, comme par exemple d'au moins 80 %, d'au moins 85 %, d'au moins 90 %, d'au moins 95 %, d'au moins 98 % ou par exemple d'au moins 99 % ou plus.

15. Procédé selon l'une quelconque des revendications précédentes, dans lequel la quantité de désémulsifiant présente dans la charge d'alimentation à l'étape a) est d'environ 0,05 % en poids à environ 1 % en poids, ou de préférence d'environ 0,4 % en poids ou d'environ 0,8 % en poids ou plus.
